# EUROPÄISCHE PATENTSCHRIFT

(11) **EP 1 626 998 B1**
(45) Veröffentlichungstag und Bekanntmachung des Hinweises auf die Patenterteilung: **01.09.2010**
(21) Anmeldenummer: 04731348.1
(22) Anmeldetag: 06.05.2004
(51) Int. Cl.: C08F 10/00, C08F 4/70, C08F 2/18

(54) **VERFAHREN ZUR HERSTELLUNG WÄSSRIGER POLYMERISATDISPERSIONEN**
METHOD FOR PRODUCING AQUEOUS POLYMER DISPERSIONS
PROCÉDÉ POUR PRODUIRE DES DISPERSIONS POLYMÉRES AQUEUSES

(30) Priorität: 16.05.2003 DE 10322466
(43) Veröffentlichungstag der Anmeldung: 22.02.2006
(73) Patentinhaber: BASF SE, 67056 Ludwigshafen (DE)
(72) Erfinder: SCHMID, Markus, 67146 Deidesheim (DE); CHOWDHRY, Mubarik, Mahmood, F-67000 Strasbourg (FR); PREISHUBER-PFLÜGL, Peter, 67061 Ludwigshafen (DE); SAVA, Xavier, 68161 Mannheim (DE); LINDNER, Ekkehard, 72076 Tübingen (DE); SUNJUK, Mahmoud, 72076 Tübingen (DE); WEGNER, Peter, 72070 Tübingen (DE)
(86) Internationale Anmeldenummer: PCT/EP2004/004815
(87) Internationale Veröffentlichungsnummer: WO 2004/101632

(56) Entgegenhaltungen:
- MIKULASOVA, D. ET AL: "Polymerization of styrene initiated by heterogeneous macromolecular initiator" EUROPEAN POLYMER JOURNAL , 10(7), 551-6 CODEN: EUPJAG; ISSN: 0014-3057, 1974, XP002293053

## Beschreibung

Die vorliegenden Erfindung betrifft ein Verfahren zur Herstellung einer wässrigen Polymerisatdispersion durch Polymerisation von wenigstens einer olefinisch ungesättigten Verbindung (Monomer) in einem wässrigen Medium in Anwesenheit wenigstens eines Dispergiermittels, welches dadurch gekennzeichnet ist, dass die Polymerisation in Anwesenheit eines festen Polymerisationskatalysators durchgeführt wird, wobei als fester Polymerisationskatalysator ein mit einem homogenen Polymerisationskatalysator imprägniertes und/oder behandeltes Trägermaterial eingesetzt wird, und wobei als homogener Polymerisationskatalysator ein Metallkomplex eingesetzt wird, der als Metallzentrum ein Metall der Gruppe VIIIB, IB oder IIB des Periodensystems enthält.

Ferner betrifft die Erfindung die nach dem erfindungsgemäßen Verfahren zugänglichen wässrigen Polymerisatdispersionen sowie deren Verwendung als Bindemittel in Klebstoffen, Dichtmassen, Kunststoffputzen, Papierstreichmassen und Anstrichmitteln.

Wässrige Polymerisatdispersionen (Latices) sind allgemein bekannt. Es handelt sich um fluide Systeme, die als disperse Phase in wässrigem Dispergiermedium aus mehreren ineinander verschlungenen Polymerisatketten bestehende Polymerisatknäuel (sogenannte Polymerisatteilchen) in disperser Verteilung enthalten. Der gewichtsmittlere Durchmesser der Polymerisatteilchen liegt häufig im Bereich von 10 bis 5000 nm.

Ebenso wie Polymerisatlösungen beim Verdampfen des Lösungsmittels, weisen wässrige Polymerisatdispersionen beim Verdampfen des wässrigen Dispergiermediums das Potential zur Ausbildung von Polymerisatfilmen auf, weshalb sie insbesondere als Bindemittel Anwendung finden. Aufgrund ihrer umweltfreundlichen Eigenschaften gewinnen sie zunehmend Bedeutung.

Die Herstellung wässriger Polymerisatdispersionen erfolgt häufig durch radikalisch initiierte wässrige Emulsionspolymerisation [vgl. z.B. Encyclopedia of Polymer Science and Engineering, Vol. 8, Seite 659 ff. (1987); D.C. Blackley, in High Polymer Latices, Vol. 1, Seite 35 ff. (1966); H. Warson, The Applications of Synthetic Resin Emulsions, Seite 246 ff., Kapitel 5 (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin 1969]. Kennzeichnend für dieses Verfahren ist, dass als Polymerisationskatalysatoren sogenannte Radikalbildner und als Hauptmonomere in der Regel sogenannte polare Monomere eingesetzt werden.

Andererseits sind eine Vielzahl von Polymerisationskatalysatoren bekannt, deren Polymerisationswirkung nicht auf Radikalbildung sondern auf einer sogenannten Monomereninsertion basiert. Für diese Polymerisationsverfahren sind insbesondere sogenannte unpolare Monomere geeignet. Wenn überhaupt, werden hierbei polare Monomere nur in untergeordnetem Maße zur Modifizierung der Polymereigenschaften verwendet. Die für diese Polymerisationsverfahren verwendeten Polymerisationskatalysatoren sind insbesondere katalytisch aktive Übergangsmetallkomplexe bzw. Übergangsmetallkomplexe in Kombination mit Verbindungen, welche die Übergangsmetallkomplexe aktivieren, sogenannten Aktivatoren. Aufgrund der in der Regel hohen Hydrolyseempfindlichkeit der Übergangsmetallkomplexe bzw. Übergangsmetallkomplex/Aktivator-Kombinationen erfolgen diese Polymerisationsreaktionen üblicherweise in Form einer Bulkpolymerisation, wobei das Monomer gleichzeitig Reaktant und Lösungmittel ist oder in Form einer Lösungspolymerisation, wobei ein nichtwässriges, häufig aprotisches organisches Lösungsmittel sowohl den Übergangsmetallkomplex bzw. die Übergangsmetallkomplex/Aktivator-Kombination, das Monomer und das gebildete Polymer gelöst enthält. Wesentlich ist, dass im Rahmen dieser Schrift, diese im Monomer, Lösungsmittel oder allgemein im Polymerisationsmedium homogen gelösten Übergangsmetallkomplexe bzw. die Übergangsmetallkomplex/Aktivator-Kombinationen als "homogene Polymerisationskatalysatoren" bezeichnet werden. Beispielhaft hierfür genannt seien die Schriften DE-A 10017660, DE-A 10118633, Leclerc et al., Angew. Chem., Int. Ed. Engl. 1998, 37, Seiten 922ff., Ziegler et al., Angew. Chem., 1955, 67, Seiten 541ff., Natta, J. Am. Chem. Soc. 1962, 84, Seiten 1488ff. sowie Sinn und Kaminsky, Adv. Organomet. Chem. 1980, 18, Seiten 99ff.

In jüngster Zeit wird verstärkt über die Polymerisation von Monomeren durch Monomereninsertion in wässrigem Medium mit hydrolysestabilen Übergangsmetallkomplexen bzw. Übergangsmetallkomplex/Aktivator-Kombinationen berichtet. Beispielhaft genannt seien hier die Schriften von Mecking, Angew. Chem. Int. Ed. 2001, 40, Seiten 534 bis 540, Bauers und Mecking, Angew. Chem. Int. Ed. 2001, 40, Seiten 3020 bis 3022, Mecking et al. Chem. Commun. 2000, Seiten 301 und 302, Spitz et al., Macromol. Symp. 2000, 150, Seiten 53ff. sowie die Offenlegungsschriften WO 01/44325, WO 00/20464, DE-A 2923206 und DE-A 3345785.

Auch die Polymerisation von Monomeren mit Kohlenmonoxid in wässrigem Medium über eine Monomereninsertion mit hydrolysestabilen Übergangsmetallkomplexen bzw. Übergangsmetallkomplex/Aktivator-Kombinationen ist bekannt. Beispiele hierfür finden sich in Held et al., Macromolecules 2002, 35, Seiten 3342 bis 3347, Lindner et al., J. Organomet. Chem. 2000, 602, Seiten 173ff., Sheldon et al., Angew. Chem. 2000, 112, Seiten 825ff. sowie in den Offenlegungsschriften WO 00/63277, DE-A 19829520, DE-A 19829520, DE-A 19917920 und DE-A 10061877.

Daneben können auch konjugierte Diene, wie beispielsweise Butadien, in wässrigem Medium mit hydrolysestabilen Übergangsmetallkomplexen bzw. Übergangsmetallkomplex/Aktivator-Kombinationen mittels Insertion polymerisiert werden [siehe beispielsweise Ono und Kato, J. Polym. Sci. A. 2000, 38, Seiten 1083 bis 1089, Rinehart, J. Polym. Sci. C. 1969, 27, Seiten 7 bis 25 sowie DE-A 2332921].

Ferner offenbart die DE-A 19859191 die ringöffnende Polymerisation von cyclischen Olefinen in wässrigem Medium mit hydrolysestabilen Übergangsmetallkomplexen bzw. Übergangsmetallkomplex/Aktivator-Kombinationen.

Nachteilig an diesen sogenannten "nichtradikalischen" Polymerisationsverfahren ist, dass die als Polymeristionskatalysatoren eingesetzten Übergangsmetallkomplexe - häufig teure Edelmetallverbindungen - molekular gelöst in der wässrigen Polymerisatdispersion verbleiben und so nur einmal genutzt werden können. Auch können die in den wässrigen Polymerisatdispersionen verbleibenden Übergangsmetallkomplexe bei der späteren Anwendung, beispielsweise bei der Polymerisatfilmbildung stören oder zur Verfärbung der gebildeten Polymerisatfilme beitragen.

Vor diesem Hintergrund des Standes der Technik bestand die Aufgabe der vorliegenden Erfindung darin, ein Verfahren zur Herstellung wässriger Polymerisatdispersionen zur Verfügung zu stellen, bei welchem keine radikalischen oder molekular gelösten Polymerisationskatalysatoren zur Polymerisation von olefinisch ungesättigten Verbindungen eingesetzt werden und bei welchem sich die Polymerisationskatalysatoren im Anschluss an die Polymerisationsreaktion in einfacher Weise von der wässrigen Polymerisatdispersion abtrennen lassen.

Dementsprechend wurde das eingangs definierte Verfahren gefunden.

Als feste Polymerisationskatalysatoren werden solche Polymerisationskatalysatoren verstanden, welche bei 20 °C in entionisiertem Wasser eine Löslichkeit von ≤ 0,1 Gew.-%, häufig ≤ 0,05 Gew-% und oft ≤ 0,01 Gew.-% aufweisen.

Die festen Polymerisationskatalysatoren können prinzipiell in jeder Form und Größe vorliegen, beispielsweise in Form von Zylindern, Ringen, Kugeln, Hohlkörpern, Netzen, Geweben oder amorphen Teilchen. Häufig liegen die festen Polymerisationskatalysatoren in Form von amorphen und/oder porösen Teilchen mit einem mittleren Teilchendurchmesser im Bereich von 1 µm bis 10 cm, oft im Bereich von 10 µm bis 1 cm bzw. im Bereich von 30 µm bis 1000 µm, vor.

Als ethylenisch ungesättigte Verbindungen (Monomere) kommen erfindungsgemäß sowohl reine ethylenisch ungesättigte Kohlenwasserstoffverbindungen als auch heteroatomhaltige α-Olefine, wie (Meth)acrylsäureester sowie Homoallyl- oder Allylalkohole, -ether oder -halogenide in Betracht. Unter den reinen ethylenisch ungesättigten Kohlenwasserstoffen sind C₂- bis C₂₀-1-Alkene geeignet. Unter diesen sind die niedermolekularen Alkene, wie beispielsweise Ethen oder α-Alkene mit 3 bis 20 C-Atomen, wie Propen, 1-Buten, 1-Penten, 1-Hexen, 1-Hepten, 1-Octen hervorzuheben. Selbstverständlich können auch cyclische Olefine, wie beispielsweise Cyclopenten, Cyclohexen oder Norbornen, konjugierte Diene, wie beispielsweise 1,3-Butadien (Butadien), 2-Chlorbutadien, 2-Methylbutadien oder 2,3-Dimethylbutadien, aromatische Olefinverbindungen, wie Styrol, α-Methylstyrol oder ortho-, meta- bzw. para-Vinyltoluol sowie Vinylester, wie Vinylacetat oder Vinylpropionat eingesetzt werden. Besonders geeignet sind jedoch die C₂- bis C₂₀-1-Alkene. Unter diesen sind Ethen, Propen, 1-Buten, 1-Penten, 1-Hexen oder 1-Octen sowie 1-Decen, 1-Dodecen, 1-Tetradecen, 1-Hexadecen und 1-Octadecen sowie diese enthaltende Olefinfraktionen eines Crackers hervorzuheben. Selbstverständlich ist es erfindungsgemäß möglich, die vorgenannten Monomere einzeln oder im Gemisch einzusetzen. Die genannten Monomere bilden in der Regel die Hauptmonomeren, die, bezogen auf die Gesamtmonomerenmenge, einen Anteil ≥ 50 Gew.-%, insbesondere ≥ 80 Gew.-% oder ≥ 90 Gew.-% auf sich vereinen. Häufig besteht das zu polymerisierende Monomerengemisch zu 100 Gew.-% aus wenigstens einem der vorgenannten Monomeren.

Darüber hinaus ist es jedoch auch möglich, die vorgenannten Monomeren im Gemisch mit solchen ethylenisch ungesättigten Verbindungen einzusetzen, die als Strukturelement wenigstens eine Amidgruppe, eine Säuregruppe und/oder deren entsprechendes Anion enthalten. Beispielhaft genannt seien α,β-monoethylenisch ungesättigte Mono-und Dicarbonsäuren sowie deren Amide, wie Acrylsäure, Methacrylsäure, Maleinsäure, Fumarsäure, Itaconsäure, Acrylamid, Methacrylamid, ferner Vinylsulfonsäure, 2-Acrylamido-2-methylpropansulfonsäure, Styrolsulfonsäure, 10-Undecensäure, 3-Butensäure, 4-Pentensäure, 5-Hexensäure und deren entsprechenden Alkalimetall-und Ammoniumsalze. Im Normalfall sind die amid- oder säuregruppenhaltigen Monomeren lediglich als modifizierende Monomere in Mengen ≤ 50 Gew.-%, ≤10 Gew.-%, bevorzugt ≤ 5 Gew.-%, jeweils bezogen auf die Gesamtmonomerenmenge, enthalten.

Im erfindungsgemäßen Verfahren wird wenigstens ein Dispergiermittel mitverwendet, das die während der Polymerisation gebildeten Polymerisatteilchen in der wässrigen Phase dispers verteilt hält und so die Stabilität der erzeugten wässrigen Polymerisatdispersion gewährleistet. Häufig, insbesondere dann, wenn der vorliegende feste Polymerisationskatalysator sehr feinteilig ist, beispielsweise 1 bis 10 µm, werden auch die festen Polymerisationskatalysatorteilchen in der wässrigen Phase dispers verteilt gehalten. Als Dispergiermittel kommen sowohl Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Cellulose-, Stärke-und Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Emulgatoren und/oder Schutzkolloiden eingesetzt werden. Häufig werden als Dispergiermittel ausschließlich Emulgatoren eingesetzt, deren relative Molekulargewichte im Unterschied zu den Schutzkolloiden üblicherweise unter 1500 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z.B. ethoxilierte Mono-, Di- und Tri-Alkylphenole (EO-Grad: 3 bis 50, Alkylrest: C₄ bis C₁₂) sowie ethoxilierte Fettalkohole (EO-Grad: 3 bis 80; Alkylrest: C₈ bis C₃₆). Beispiele hierfür sind die Lutensol^{®} A-Marken (C₁₂C₁₄-Fettalkoholethoxilate, EO-Grad: 3 bis 8), Lutensol^{®} AO-Marken (C₁₃C₁₅-Oxoalkoholethoxilate, EO-Grad: 3 bis 30), Lutensol^{®} AT-Marken (C₁₆C₁₈-Fettalkoholethoxilate, EO-Grad: 11 bis 80), Lutensol^{®} ON-Marken (C₁₀-Oxoalkoholethoxilate, EO-Grad: 3 bis 11) und die Lutensol^{®} TO-Marken (C₁₃-Oxoalkoholethoxilate, EO-Grad: 3 bis 20) der BASF AG.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 50, Alkylrest: C₁₂ bis C₁₈) und ethoxilierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈).

Als weitere anionische Emulgatoren haben sich ferner Verbindungen der allgemeinen Formel I 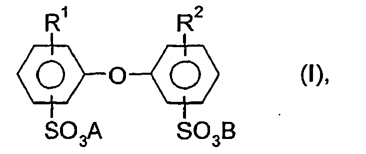 worin R¹ und R² H-Atome oder C₄-bis C₂₄-Alkyl bedeuten und nicht gleichzeitig H-Atome sind, und A und B Alkalimetallionen und/oder Ammoniumionen sein können, erwiesen. In der allgemeinen Formel I bedeuten R¹ und R² bevorzugt lineare oder verzweigte Alkylreste mit 6 bis 18 C-Atomen, insbesondere mit 6, 12 und 16 C-Atomen oder -H, wobei R¹ und R² nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, R¹ ein verzweigter Alkylrest mit 12 C-Atomen und R² ein H-Atom oder R¹ ist. Häufig werden technische Gemische verwendet, die einen Anteil von 50 bis 90 Gew.-% des monoalkylierten Produktes aufweisen, wie beispielsweise Dowfax^{®} 2A1 (Marke der Dow Chemical Company). Die Verbindungen I sind allgemein bekannt, z.B. aus US-A 4 269 749, und im Handel erhältlich.

Geeignete kationenaktive Emulgatoren sind in der Regel einen C₆- bis C₁₈-Alkyl-, -Aralkyl- oder einen heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N-Octyl-N,N,N-trimethlyammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in Mc-Cutcheon's, Emulsifiers & Detergents, MC Publishing Company, Glen Rock, 1989.

Insbesondere geeignet sind jedoch nichtionische und/oder anionische Emulgatoren.

In der Regel werden insgesamt 0,05 bis 10 Gew.-Teile, häufig 0,1 bis 7 Gew.-Teile und oft 1 bis 5 Gew.-Teile an Dispergiermittel, jeweils bezogen auf 100 Gew.-Teile an wässrigem Medium, gebildet aus den Mengen an entionisiertem Wasser und dem wenigstens einen Dispergiermittel, verwendet.

Erfindungsgemäß wird als fester Polymerisationskatalysator ein mit einem homogenen Polymerisationskatalysator imprägniertes und/oder behandeltes Trägermaterial eingesetzt.

Die in Frage kommenden Trägermaterialien sind in der Regel inert und weisen selbst keine polymerisationskatalysierende Wirkung auf. Sie können sowohl organischer wie auch anorganischer Natur sein.

Als organische Träger sind in partikulärer Form vorliegende Materialien geeignet. Es kommen Aktivkohle, Cellulose, Dextran, Dextrose oder organische Polymere oder Copolymere in Frage. Unter Polymere und Copolymere fallen beispielsweise Polyolefine wie Polyethylen, Polypropylen, Poly-1-buten und Polymethyl-1-penten und Copolymere mit diesen Polymeren zugrunde liegenden Monomeren, weiterhin Polyester, Polyamide, Polyvinylchlorid, Polyacrylate und -methacrylate sowie Polystyrol. Desweiteren geeignet sind Copolymere, insbesondere ternäre Copolymere aus Kohlenmonoxid und olefinisch ungesättigten Verbindungen wie Ethen, Propen oder 1-Buten, also zum Beispiel Kohlenmonoxid/Ethen/Propen- oder ein Kohlenmonoxid/Ethen/1-Buten-Terpolymere. Die geeigneten organischen Trägermaterialien werden in der Regel als getrocknete Polymerpulver eingesetzt, deren Partikel bevorzugt eine Korngröße im Bereich von 5 bis 300 µm, oft im Bereich von 10 bis 150 µm bzw. im Bereich von 30 bis 80 µm aufweisen. Die polymeren Trägersysteme können nach allgemein bekannten Verfahren hergestellt werden.

Als anorganische Träger kommen Materialien, wie beispielsweise Silicagel, Aluminium-, Magnesium-, Titan-, Zirkonium-, Bor-, Calcium- oder Zinkoxide, Alumosilikate, Polysiloxane, Talkum, Schichtsilikate oder Zeolithe in Frage. Auch andere in Wasser schwerlösliche Metallverbindungen, wie schwerlösliche Metallsalze, beispielsweise Metallsulfate, wie Bariumsulfat sowie Metallsulfide oder Metallphosphate sind als Träger geeignet. Besonders bevorzugte Träger sind beispielsweise Kieselgele, bevorzugt solche der Formel SiO₂ - a AL₂O₃, worin a für eine Zahl im Bereich von 0 bis 2 steht, vorzugsweise 0 bis 0,5, also Alumosilikate oder Siliciumdioxid. Als Silicagele sind geeignet granuläres Silicagel, zum Beispiel das Handelsprodukt SG 332 der Fa. Grace, silyliertes Silicagel, erhältlich aus herkömmlichem Silicagel durch Behandeln mit Trimethylchlorsilan, passiviertes Silicagel, erhältlich durch Behandeln von herkömmlichem Silicagel mit Aluminiumtrialkylen, oder sphärisches Silicagel, zum Beispiel Silicagel^{®} ES 70x der Fa. Crosfield. Polysiloxane, z.B. das Produkt Deloxan^{®} der Fa. Degussa, sowie saure Schichtsilikate, z.B. das Produkt K10 der Fa. Südchemie, können ebenfalls als Trägermaterialien eingesetzt werden. Des Weiteren können pyrogene Kieselsäuren eingesetzt werden, d.h. hochdisperse Kieselsäuren, die üblicherweise durch Flammhydrolyse von Siliciumtetrachlorid in der Knallgasflamme hergestellt werden. Pyrogene Kieselsäuren zeichnen sich durch eine nahezu porenfreie Oberfläche aus und verfügen über eine reduzierte Anzahl freier Hydroxygruppen. Besonders bevorzugt wird auf Silicagele, insbesondere sphärische oder granuläre Silicagele zurückgegriffen. Diese Silicagele weisen im allgemeinen einen mittleren Partikeldurchmesser von 10 bis 100 µm, insbesondere von 30 bis 80 µm auf. Die spezifische Oberfläche (BET) liegt bei den bevorzugten Silicagelen in der Regel im Bereich von 50 bis 1000 m²/g, insbesondere im Bereich von 100 bis 400 m²/g, das Porenvolumen bei 0,5 bis 5 ml/g, insbesondere bei 1,0 bis 3,5 ml/g.

Das Trägermaterial kann mit dem homogenen Polymerisationskatalysator imprägniert und/oder behandelt werden. Dabei soll im Rahmen dieser Schrift der Begriff "imprägniert" bedeuten, dass der homogene Polymerisationskatalysator auf ein nichtreaktives, inertes Trägermaterial aufgebracht wird und zwischen dem Trägermaterial und dem homogenen Polymerisationskatalysator lediglich physikalisch adsorptive Kräfte vorliegen. Unter "behandelt" soll verstanden werden, dass der homogene Polymerisationskatalysator auf ein Trägermaterial aufgebracht wird und sich dabei zwischen dem Trägermaterial und dem homogenen Polymerisationskatalysator chemische Bindungen ausbilden. Hierzu können beispielsweise die funktionellen Gruppen auf der Oberfläche anorganischer Trägermaterialien, z.B. bei Silicagelen oder Aluminiumoxiden, gezielt modifiziert werden. Beispielsweise lässt sich das Oberflächenverhalten von Silicagelen oder Aluminiumoxiden durch Behandlung mit Halogensilanen, Halogenboranen, Aluminiumalkylen oder Boralkylen oder deren Mischungen oder mit Aminosilanen gezielt modifizieren. Selbstverständlich sind auch Zwischenformen vorgenannter Polymerisationskatalysatoren möglich, bei denen Teilmengen des homogenen Polymerisationskatalysators chemisch und die Restmengen physikalisch adsorptiv an das feste Trägermaterial gebunden sind.

Auch sind dem Fachmann Syntheseverfahren für feste Polymerisationskatalysatoren bekannt, in denen der homogene Polymerisationskatalysator bei der Herstellung des festen Trägermaterials, beispielsweise bei der Fällung oder der nachfolgenden Aufarbeitung, anwesend ist und so chemisch in die Trägerstruktur eingebaut werden kann (siehe hierzu beispielsweise US-A 5567801, WO 96/28480, EP-A 559288, EP-A 511713 oder EP-A 572087 sowie Lindner et al., Angew. Chem., 1999, 111, Seiten 2288 bis 2309).

Ferner ist die Herstellung eines festen Polymerisationskatalysators, welcher aus einem festem Trägermaterial besteht, das nachträglich mit einem homogenen Polymerisationskatalysator imprägniert oder behandelt wurde, dem Fachmann geläufig (siehe hierzu beispielsweise US-A 5567801, US-A 5331083, EP-A 248483, EP-A 404228, EP-A 443687, EP-A 511713, EP-A 559288, EP-A 559289 oder EP-A 722968).

So erfolgt die Herstellung des festen Polymerisationskatalysators beispielsweise dergestalt (siehe hierzu DE-A 19746280), dass man
a) das Trägermaterial in einem unpolaren aprotischen flüssigen Lösungsmittel suspendiert,
b) einen in einem polaren aprotischen flüssigen Lösungsmittel gelösten homogenen Polymeristationskatalysator kontrolliert zur Suspension nach a) gibt,
c) die nach b) erhaltene Mischung filtriert, gegebenenfalls den erhaltenen festen Rückstand mit einem unpolaren aprotischen flüssigen Lösungsmittel wäscht und
d) den als festen Rückstand erhaltenen festen Polymerisationskatalysator im Vakuum oder Inertgasstrom von noch anhaftenden Lösungsmittel befreit,
oder wenn man
i) das Trägermaterial in einem polaren aprotischen flüssigen Lösungsmittel suspendiert,
ii) einen in einem polaren aprotischen flüssigen Lösungsmittel gelösten homogenen Polymeristationskatalysator kontrolliert zur Suspension nach i) gibt,
iii) die nach ii) erhaltene Mischung kontrolliert mit einem unpolaren aprotischen flüssigen Lösungsmittel versetzt,
iv) die nach iii) erhaltene Mischung filtriert, gegebenenfalls den erhaltenen Rückstand mit einem unpolaren aprotischen flüssigen Medium wäscht, und
v) den als festen Rückstand erhaltenen festen Polymerisationskatalysator im Vakuum oder Inertgasstrom von noch anhaftenden Lösungsmittel befreit.

Das Trägermaterial kann alternativ auch in der Katalysatorlösung suspendiert und daran anschließend das Lösungsmittel im Vakuum entfernt werden.

Dabei kommen als unpolare aprotische flüssige Lösungsmittel vor allem lineare oder verzweigte aliphatische Kohlenwasserstoffe wie n-Pentan, iso-Pentan, Hexan, Heptan, Octan, Decan, Dodecan, Isododecan oder deren Gemische in Frage. Auch technische Gemische verschiedener solcher Kohlenwasserstoffe wie Kerosin, Petrolether oder Isopar E^{®} können verwendet werden. Weiterhin sind als unpolare aprotische flüssige Medien cycloaliphatische Lösungsmittel wie Cyclohexan oder Norbornan zu nennen. Aus Gründen der Verfügbarkeit wird bevorzugt n-Pentan verwendet.

Geeignete polare aprotische flüssige Lösungsmittel stellen die halogenierten Kohlenwasserstoffe, wie Dichlormethan, Dichlorethan oder Chloroform, aromatische Kohlenwasserstoffe, wie Benzol, Toluol, Ethylbenzol, Xylol oder Chlorbenzol oder aliphatische Ether, wie Tetrahydrofuran oder beliebige Gemische dieser Verbindungen dar. Weiterhin können Acetonitril oder Aceton als flüssige polare aprotische Lösungsmittel oder als eine Komponente unter mehreren zum Einsatz kommen. Bevorzugt werden Aceton, Dichlormethan, Tetrahydrofuran, Acetonitril oder deren Gemische sowie insbesondere Dichlormethan eingesetzt. Entscheidend ist, dass die beschriebenen Flüssigkeiten bzw. Flüssigkeitsgemische unterschiedlicher Polarität nicht oder nur in ganz geringem Umfang miteinander mischbar sind. Dieses hat insbesondere auch für die jeweiligen, mit gelösten oder ungelösten Reaktionsbestandteilen, wie homogener Polymerisationskatalysator oder Trägermaterial versehenen Flüssigkeitssysteme zu gelten.

Von Bedeutung ist jedoch, dass man die homogenen Polymerisationskatalysatoren und die Trägermaterialien dabei so auswählt, dass die homogenen Polymerisationskatalysatoren physikalisch und/oder chemisch so fest auf dem festen Trägermaterial verankert sind, dass sie im wässrigen Polymerisationsmedium aus entionisiertem Wasser und wenigstens einem Dispergiermittel auch unter Reaktionsbedingungen nicht oder nur in sehr geringem Maße vom festen Trägermaterial abgelöst werden.

Erfindungsgemäß wird als homogener Polymerisationskatalysator ein Metallkomplex eingesetzt, der als Metallzentrum ein Metall der Gruppe VIIIB, IB oder IIB des Periodensystems, beispielsweise Kupfer, Silber, Gold, Zink, Cadmium, Quecksilber, Eisen, Kobalt, Nickel, Ruthenium, Rhodium, Palladium, Osmium, Iridium oder Platin, bevorzugt jedoch Eisen, Kobalt, Nickel, Ruthenium, Rhodium, Palladium, Osmium, Iridium oder Platin und insbesondere bevorzugt Kobalt, Nickel, Ruthenium oder Palladium enthält. Solche Metallkomplexe sind beispielsweise in EP-A 121965, EP-A 743336, WO 96/23010, WO 98/42664, WO 98/42665 oder WO 01/10876 beschrieben.

Häufig werden solche Metallkomplexe erst durch sogenannte Aktivatoren aktiviert. Ist dies der Fall, so stellt man zweckmäßigerweise zuerst den festen Polymerisationskatalysator her, indem man das feste Trägermaterial mit dem homogenen Polymerisationskatalysator imprägniert und/oder behandelt und die Aktivatorkomponente erst dem Polymerisationsgemisch, bestehend aus entionisiertem Wasser, wenigstens einem Dispergiermittel und dem festen Polymerisationskatalysator, unmittelbar vor der Polymerisationsreaktion zusetzt.

Zur erfindungsgemäßen Polymerisation der Monomeren eignen sich beispielsweise 1,3-Bis(di-(n-decyl)phosphino)propan)palladium(II)acetat auf Kieselgel, 1,3-Bis(di-(n-decyl)phosphino)propan)palladium(II)acetat auf Aktivkohle oder 1,3-Bis(diphenylphosphinö)palladium(II)acetat auf Kieselgel.

Im erfindungsgemäßen Verfahren können prinzipiell auch sogenannte heterogene Polymerisationskatalysatoren eingesetzt werden. Dabei soll im Rahmen dieser Schrift unter einem heterogenen Polymerisationskatalysator ein fester Polymerisationskatalysator, dessen Feststoff im wesentlichen selbst aus einer polymerisationskatalysierenden Masse besteht, wie beispielsweise in Ziegler et al., Angew. Chem. 1955, 67, Seiten 541ff. offenbart, verstanden werden.

Verfahrenswesentlich ist, dass das erfindungsgemäße Verfahren zur Polymerisation von Monomeren auch in Anwesenheit von Kohlenmonoxid durchgeführt werden kann. Hierfür können prinzipiell alle vorgenannten Monomeren eingesetzt werden. Bevorzugt werden jedoch reine ethylenisch ungesättigte Kohlenwasserstoffverbindungen, wie C₂-bis C₂₀-1-Alkene, cyclische Olefine, konjugierte Diene oder aromatische Olefinverbindungen und deren Gemische verwendet. Unter diesen sind die niedermolekularen Alkene, wie beispielsweise Ethen oder α-Alkene mit 3 bis 20 C-Atomen, wie Propen, 1-Buten, 1-Penten, 1-Hexen, 1-Hepten, 1-Octen hervorzuheben. Als cyclische Olefine werden beispielsweise Cyclopenten, Cyclohexen oder Norbornen, als konjugierte Diene beispielsweise Butadien, 2-Chlorbutadien, 2-Methylbutadien oder 2,3-Dimethylbutadien und als aromatische Olefinverbindungen beispielsweise Styrol, α-Methylstyrol oder ortho-, meta- bzw. para-Vinyltoluol eingesetzt. Besonders geeignet sind jedoch die C₂- bis C₂₀-1-Alkene. Unter diesen sind Ethen, Propen, 1-Buten, 1-Penten, 1-Hexen oder 1-Octen sowie 1-Decen, 1-Dodecen, 1-Tetradecen, 1-Hexadecen und 1-Octadecen sowie diese enthaltende Olefinfraktionen eines Crackers hervorzuheben. Selbstverständlich ist es erfindungsgemäß möglich, die vorgenannten Monomere einzeln oder im Gemisch einzusetzen. Die genannten Monomere bilden in der Regel die Hauptmonomere, die, bezogen auf die Gesamtmonomerenmenge, einen Anteil ≥ 50 Gew.-%, insbesondere ≥ 80 Gew.-% oder ≥ 90 Gew.-% auf sich vereinen. Häufig besteht das zu polymerisierende Monomerengemisch zu 100 Gew.-% aus wenigstens einem der vorgenannten Monomeren.

Als Reaktionsprodukte werden wässrige Polymerisatdispersionen sogenannter Polyketonverbindungen erhalten. Die Reaktionsbedingungen unter denen die Monomere und Kohlenmonoxid in Anwesenheit eines festen Polymerisationskatalysators umgesetzt werden, entsprechen im wesentlichen den Bedingungen, unter denen Monomere und Kohlenmonoxid in wässrigem Medium in Anwesenheit homogen gelöster Polymerisationskatalysatoren polymerisiert werden. Diese Bedingungen sind dem Fachmann geläufig (siehe hierzu beispielsweise DE-A 10061877 oder EP-A 121965).

Zur Herstellung von wässrigen Polyketondispersionen sind alle die festen Polymerisationskatalysatoren geeignet, die in der Lage sind die Bildung von Polyketonen in wässrigem Medium zu initiieren. Häufig werden diese Katalysatoren erhalten, indem ein festes Trägermaterial mit einem homogenen, zur Ausbildung von Polyketonen geeigneten hydrolysestabilen Polymerisationskatalysator imprägniert oder behandelt wird.

Beispiele homogener, hydrolysestabiler Polymerisationskatalysatoren zur Herstellung von Polyketonen finden sich beispielsweise in Held et al., Macromolecules 2002, 35, Seiten 3342 bis 3347, sowie in den Offenlegungsschriften WO 00/63277 oder DE-A 10061877.

Daneben können in wässrigem Medium prinzipiell auch cyclische Olefine in einer ringöffnenden Polymerisationsreaktion mit entsprechend geeigneten festen Polymerisationskatalysatoren zu wässrigen Polymerisatdispersionen umgesetzt werden.

Von Bedeutung ist, dass das Verfahren auch in Anwesenheit von ≤ 10 Gew.-% eines organischen Lösungsmittel, bezogen auf das wässrige Medium, bestehend aus Wasser und Dispergiermittel, durchgeführt werden kann. Dabei können als organische Lösungsmittel polare protische oder polar aprotische organische Verbindungen mit einem Molekulargewicht ≤ 200 g/mol eingesetzt werden. Beispiele hierfür sind polare aprotische organische Lösungsmittel, wie die halogenierten Kohlenwasserstoffe, beispielsweise Dichlormethan, Dichlorethan oder Chloroform, aromatische Kohlenwasserstoffe, beispielsweise Benzol, Toluol, Ethylbenzol, Xylol oder Chlorbenzol oder aliphatische Ether, wie Tetrahydrofuran oder beliebige Gemische dieser Verbindungen dar. Weiterhin können Acetonitril oder Aceton als flüssige polare aprotische Lösungsmittel oder als eine Komponente unter mehreren zum Einsatz kommen. Polar protische organische Lösungsmittel sind beispielsweise C₁- bis C₁₀-Alkanole, insbesondere C₁- bis C₆-Alkanole, wie beispielsweise Methanol, Ethanol, n-Propanol, iso-Propanol, 1-Butanol, 2-Butanol, 2-Methyl-propanol-2, sowie die entsprechenden isomeren Pentanole, Hexanole oder Heptanole. Die Menge des organischen Lösungsmittels, bezogen auf das wässrige Medium, bestehend aus Wasser und Dispergiermittel, beträgt oft ≤ 5 Gew.-%, oder ≤ 3 Gew.-% oder ≤ 1 Gew.-%. Häufig erfolgt die Polymerisationsreaktion ohne Zusatz von organischem Lösungsmittel.

Die Menge des zur Polymerisation eingesetzten festen Polymerisationskatalysators ist abhängig von seiner Aktivität unter den Reaktionsbedingungen und kann vom Fachmann in einfachen Vorversuchen ermittelt werden. Dabei ist es wirtschaftlich vorteilhaft, wenn die festen Polymerisationskatalysatoren und die Polymerisationsbedingungen so gewählt werden, dass aus den Monomeren pro Gramm festem Polymerisationskatalysator und Stunde wenigstens 100 g Polymerisat gebildet werden.

Für die Verwendung der nach dem erfindungsgemäßen Polymerisationsverfahren erhältlichen wässrigen Polymerisatdispersionen ist es häufig vorteilhaft, wenn diese einen möglichst geringen Gehalt an Übergangsmetallverbindungen [Gruppen VIIIB, IB, IIB des Periodensystems der Elemente] aufweisen. Demgemäß ist es von Vorteil, wenn zur Polymerisation in wässrigem Medium solche festen Polymerisationskatalysatoren ausgewählt werden, deren Metalllöslichkeit im wässrigen Medium so gering wie möglich ist.

Wird beispielsweise als fester Polymerisationskatalysator ein mit einem homogenen Polymerisationskatalysator imprägniertes oder behandeltes festes Trägermaterial eingesetzt, so es vorteilhaft, das feste Trägermaterial, den homogenen Polymerisationskatalysator und die Art und Weise der Aufbringung des homogenen Polymerisationskatalysators so zu wählen, dass der homogene Polymerisationskatalysator fest auf dem festen Trägermaterial verankert ist. Insbesondere vorteilhaft ist es, wenn der homogene Polymersationskatalysator so fest auf dem festen Trägermaterial physikalisch und/oder chemisch gebunden ist, dass nach Durchführung eines Polymerisationsansatzes wenigstens 90 Gew.-%, oft ≥ 95 Gew.-% oder ≥ 98 Gew.-% des homogenen Katalysators, bezogen auf die Gesamtmenge des homogenen Katalysators auf dem Trägermaterial vor der Polymerisationsreaktion, auf dem Trägermaterial verbleiben. Diese Bestimmung kann beispielsweise dergestalt durchgeführt werden, dass der Gehalt des Übergangsmetalls aus dem homogenen Polymerisationskatalysators auf dem festen Trägermaterial vor und nach der Poylmerisationsreaktion bestimmt wird; alternativ kann auch der Gehalt des Übergangsmetalls in der wässrigen Polymerisatdispersion gemessen werden.

In einer bevorzugten Ausführungsform wird der feste Polymerisationskatalysator in Form von Partikeln eingesetzt wird, deren minimaler Durchmesser wenigstens um den Faktor 10 größer ist als der gewichtsmittlere Durchmesser der durch die Polymerisation gebildeten Polymerisatteilchen. Vorteilhaft ist, wenn der minimale Durchmesser oder die minimale Korngröße des festen Polymerisationskatalysators sich um den Faktor ≥ 20, ≥ 50 oder ≥ 100 vom gewichtsmittleren Durchmesser der Polymerisatteilchen unterscheidet.

Die Herstellung der wässrigen Polymerisatdispersion erfolgt häufig unter Sauerstoffausschluß, beispielsweise unter Inertgasatmosphäre, wie Stickstoff oder Argon sowie unter Kohlenmonoxid- bzw. Monomerenatmosphäre.

Die Polymerisationstemperatur und der Polymerisationsdruck ist stark abhängig von der Aktivität des eingesetzten festen Polymerisationskatalysators und der Reaktivität der umzusetzenden Monomeren. Dabei kann die Polymeristionstemperatur 0 bis 200 °C, oder 20 bis 150°C sowie 40 bis 120°C und der Polymerisationsdruck gemessen in der Gasphase 1 bis 300 bar, oder 5 bis 200 bar sowie 10 bis 100 bar (jeweils Absolutwerte) betragen.

Die Polymerisationsreaktion der Monomeren kann prinzipiell diskontinuierlich, semikontinuierlich oder kontinuierlich, mit oder ohne Polymersaat erfolgten. Häufig werden dabei Teilmengen oder Gesamtmengen des entionisierten Wassers, des wenigstens einen Dispergiermittels, des wenigstens einen festen Polymerisationskatalysators sowie gegebenenfalls Polymersaat unter Inertgasatmosphäre in einer Reaktionszone vorgelegt, auf Reaktionstemperatur aufgeheizt und diesem Reaktionsgemisch die gegebenenfalls verbliebenen Restmengen vorgenannter Komponenten, die Gesamtmenge der Monomeren sowie gegebenenfalls Kohlenmonoxid zugegeben. Auch ist es möglich dem Reaktionsgemisch bereits vor dem Aufheizen auf Reaktionstemperatur eine Teilmenge oder die Gesamtmenge der Monomeren bzw. gegebenenfalls Kohlenmonoxid zuzugeben. Selbstverständlich ist es auch möglich die Monomeren dem Reaktionsgemisch nach Maßgabe ihres Verbrauchs nach der dem Fachmann bekannten Gradientenfahrweise zuzuleiten. Als Reaktionszone soll hierbei ein geeigneter Polymerisationsreaktor, wie beispielsweise ein Rührkessel, eine Rührkesselkaskade, ein Rohrreaktor oder ein Schlaufenreaktor verstanden werden.

Die erhaltenen wässrigen Polymerisatdispersionen weisen Polymerisatfeststoffgehalte von 0,1 bis 70 Gew.-%, von 5 bis 65 Gew.-% oder 10 bis 55 Gew.-%, jeweils bezogen auf die wässrige Polymerisatdispersion, auf.

Ist die zur Polymerisation verwendete Menge des festen Polymerisationskatalysator gering, der Polymerisationskatalysator einfach und kostengünstig zugänglich oder stört der verwendete Polymerisationskatalysator aufgrund seiner Zusammensetzung und Größe nicht bei der späteren Verwendung der wässrigen Polymerisatdispersion, so kann der feste Polymerisationskatalysator häufig in der wässrigen Polymerisatdispersion belassen werden. Dies ist kann beispielsweise dann der Fall sein, wenn feinteiliger fester Polymerisationskatalysator auf Basis anorganischer Trägermaterialien (z.B. Titandioxid, Siliziumdioxid oder Aluminiumoxid) eingesetzt wird und bei der anschließenden Verwendung der wässrigen Polymerisatdispersion als Bindemittel, beispielsweise in Anstrich-, Klebe-, Dicht-, Kunststoffputz- oder Papierstreichmassen, der entsprechenden Formulierung die gleichen anorganischen Materialien, beispielsweise als Pigmente oder Füllstoffe zugemischt werden.

Da sich der feste Polymerisationskatalysator in der Regel in seiner Dichte und/oder der Größe seiner Partikel von der Dichte und/oder der Größe der Polymerisatteilchen unterscheidet, kann er bei Bedarf in einfacher Weise durch Filtration oder Zentrifugation von der gebildeten wässrigen Polymerisatdispersion abgetrennt werden. Die entsprechenden Verfahrensmaßnahmen sind dem Fachmann bekannt. Nach Abtrennung des festen Polymerisationskatalysators weist die erhaltene wässrige Polymerisatdispersion in der Regel einen, im Vergleich zu einer entsprechenden über homogen katalysierte Polymerisation hergestellten wässrigen Polymerisatdispersionen, deutlich geringeren Gehalt an Übergangsmetallionen auf. Auch diese wässrigen Polymerisatdispersionen eignen sich in vorzüglicher Weise als Bindemittel in Klebstoffen, Dichtmassen, Kunststoffputzen, Papierstreichmassen und Anstrichmitteln.

Der abgetrennte feste Katalysator kann durch Waschen mit entionisiertem Wasser von anhaftender wässriger Polymerisatdispersion befreit und in feuchter oder getrockneter Form, häufig unter einem Inertgas, wie beispielsweise Stickstoff oder Argon, über mehrere Wochen oder Monate aufbewahrt werden. Von wirtschaftlichem Vorteil ist, dass dieser bereits verwendete feste Polymerisationskatalysator ohne oder nur mit geringem Aktivitätsverlust erneut für weitere Polymerisationsreaktionen von Monomeren in wässrigem Medium in Anwesenheit wenigstens eines Dispergiermittels verwendet werden kann.

Durch das vorliegende Verfahren sind breit einsetzbare wässrige Polymerisatdispersionen auf Basis von sehr günstig verfügbaren ethylenisch ungesättigten Verbindungen zugänglich. Dabei ist von technischem Vorteil, dass die wässrigen Polymerisatdispersionen nach Abtrennung der festen Polymerisationskatalysatoren keine oder nur sehr geringe Mengen an Übergangsmetallionen enthalten und von wirtschaftlichem Vorteil, dass der feste Polymerisationskatalysator mehrfach wiederverwendet werden kann.

### Beispiele

### 1 Herstellung des festen Polymerisationskatalysators

### 1.1 Herstellung von 1-(Di(diethylphosphonato-3-propyl))phosphino-3-(diethylphosphonato-3-propyl-8-trimethoxyoctylphosphino)propan (1) [Synthese analog Lindner et al., J Organomet. Chem. 2000, 602]

In einem Schlenkrohr aus Quartzglas mit magnetischem Rührer wurden unter Argon-Schutzgasatmosphäre 600 mg 1,3-Diphosphinopropan eingewogen und bei Raumtemperatur mit 1,3 g Trimethoxy-7-octen versetzt und mit einer Quecksilberhochdrucklampe (700 W) für 10 Stunden unter Rühren belichtet. Danach gab man unter Argonschutzgas 2,9 g Diethylallylphosphonat (99 Gew.-%, Fa. Aldrich) zu und belichtete weitere 24 Stunden. Anschließend entfernte man nicht umgesetzte Einsatzstoffe durch Abdampfen bei 80 °C und 1 mbar (absolut). Als Rückstand erhielt man 4,76 g Produkt 1 entsprechend einer Ausbeute von 99 Gew.-%.

### 1.2 Herstellung von Diacetonitril-1-(di(diethylphosphonato-3-propyl))phosphino-3-(diethylphosphonato-3-propyl-8-trimethoxyoctylphosphino)propanpalladium(II)bis(tetrafluoroborat) (2)

In einem Schlenkrohr mit magnetischem Rührer wurde unter Argon-Schutzgasbedingungen eine Lösung von 0,417 g Tetrakis(acetonitril)palladium(II)tetrafluoroborat (Fa. Strem) in 10 ml wasserfreiem Acetonitril vorgelegt und bei 20 bis 25 °C (Raumtemperatur) mit einer Lösung von 0,82 g Produkt 1 in 5 ml wasserfreiem Acetonitril versetzt und 1 Stunde gerührt. Danach wurde das Lösemittel im Vakuum (1 mbar absolut) abgezogen. Nach erneutem Auflösen des Rückstands in 10 ml wasserfreiem Dichlormethan wurde das Produkt 2 durch Zugabe von 20 ml n-Hexan ausgefällt und nach Filtration im Vakuum (siehe Punkt 1.1) getrocknet. Man erhielt 0,986 g Komplex 2, entsprechend einer Ausbeute von 96 Gew.-%.

### 1.3 Herstellung eines festen Polymerisationskatalysators

Zu einer Lösung, gebildet aus 0,986 g Komplex 2, 5 ml wasserfreiem Dichlormethan und 5 ml wasserfreiem Acetonitril wurden 2,63 g 1,8-Bis[(dimethoxy)methylsilyl]octan und 0,75 g entionisiertes Wasser, 30 mg Dibutylzinnacetat (95 Gew.-%, Fa. Aldrich) und 30 µl Methanol gegeben und drei Stunden bei 0 °C in einem Schlenkrohr mit einem Magnetrührer gerührt. Es bildetet sich ein Gel, das im Vakuum (bis 1 mbar absolut) getrocknet wurde. Der erhaltene pulverförmige Feststoff wurde dreimal mit 30 ml Toluol gewaschen und nochmals im Vakuum (siehe Punkt 1.1) getrocknet. Man erhielt 1,2 g festen pulverförmigen Polymerisationskatalysator 3.

### 2 Polymerisation

### 2.1 Polymerisationsbeispiel 1

In einem Stahlautoklaven (Volumen 150 ml) mit mechanischem Rührer und elektrischer Heizung wurde 500 mg des festen pulverförmigen Polymerisationskatalysators 3 unter Stickstoffatmosphäre in einer Mischung aus 20 ml entionisiertem Wasser, 12 ml einer 1 gew.-%igen Lösung von Tetrafluoroborsäure in entionisiertem Wasser und 1 g Natriumlaurylsulfat (99 Gew.-%, Fa. Aldrich) suspendiert. Zur dieser Suspension wurden bei Raumtemperatur 15 g Propen gegeben und danach der Druck mit Kohlenmonoxid auf 50 bar eingestellt. Nach dem Aufheizen auf 60 °C regulierte man den Druck während einer fünfstündigen Reaktionszeit auf 60 bar ein. Anschließend wurde die Reaktionsmischung auf Raumtemperatur abgekühlt und der Autoklaveinhalt auf Atmosphärendruck entspannt.

Der feste pulverförmige Polymerisationskatalysator 3 wurde durch Filtration über ein Porzellanfritte (G3) von der wässrigen Polymerisatdispersion abgetrennt. Der nach Spülen mit entionisiertem Wasser und Trocknen erhaltene Polymerisationskatalysatorfilterrückstand betrug 490 mg.

Es wurden 40 g einer wässrigen Copolymerisatdispersion mit einem Feststoffgehalt von 23 Gew.-% und einem Koagulatgehalt < 1 Gew.-% erhalten. Dabei wurde der Koagulatgehalt durch Filtration der wässrigen Polymerisatdisperion über ein 40 µm-Filter ermittelt.

Der mittlere Copolymerisatteilchendurchmesser betrug 250 nm. Der Schmelzpunkt wurde zu 150 °C bestimmt. Die Glasübergangstemperatur lag bei 20 °C.

Das massengemittelte Molekulargewicht wurde per Gelpermeationschromatographie (GPC) mit 30000 g/mol ermittelt (Hexafluorisopropanol mit 0,05 Gew.-% Trifluoressigsäure-Kaliumsalz; die Kalibrierung erfolgte mit eng verteilten Polymethacrylat-Standards der Fa. PSS mit Molekulargewichten von M = 505 bis M = 2740000; außerhalb dieses Intervalls liegende Elutionsbereiche wurden durch Extrapolation abgeschätzt; die Detektion erfolgte mit einem Differentialrefraktometer HP 1100 der Fa. Hewlett Packard).

Darüber hinaus war die wässrige Copolymerisatdispersion stabil und zeigte über 10 Wochen keine Phasenseparierung, Abscheidungen oder Koagulatbildung.

Der Feststoffgehalt wurde generell bestimmt, indem ca. 1 g der wässrigen Copolymerisatdispersion in einem offenen Aluminiumtiegel mit einem Innendurchmesser von ca. 3 cm in einem Trockenschrank bei 100 °C und 10 mbar (absolut) bis zur Gewichtskonstanz getrocknet wurde. Zur Bestimmung des Feststoffgehalts wurden jeweils zwei separate Messungen durchgeführt und der entsprechende Mittelwert gebildet.

Der mittlere Teilchendurchmesser der Copolymerisatteilchen wurde generell durch dynamische Lichtstreuung an einer 0,005 bis 0,01 gewichtsprozentigen wässrigen Dispersion bei 23 °C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

Die Bestimmung der Glasübergangstemperatur bzw. des Schmelzpunktes erfolgte generell gemäß DIN 53765 mittels eines DSC820-Geräts, Serie TA8000 der Fa. Mettler-Toledo.

### 2.2 Polymerisationsbeispiel 2

Das Polymerisationsbeispiel 1 wurde wiederholt mit dem Unterschied, dass anstelle von 500 mg frischen festen Polymerisationskatalysator 1 lediglich 450 mg des festen Polymerisationskatalysatorrückstands aus Polymerisationsbeispiel 1 und anstatt Propen 1-Buten eingesetzt wurden.

442 mg des festen Polymerisationskatalysators wurden durch Filtration zurückgewonnen. Man erhielt 39 g einer 20 gew-% igen wässrigen Copolymerisatdispersion, deren Copolymerisatteilchen eine mittlere Teilchengröße 220 nm aufwiesen. Das Copolymerisat wies eine Glasübergangstemperatur von 10°C und ein mittleres Molekulargewicht von 35000 g/mol auf.

## Patentansprüche

1. Verfahren zur Herstellung einer wässrigen Polymerisatdispersion durch Polymerisation von wenigstens einer olefinisch ungesättigten Verbindung in einem wässrigen Medium in Anwesenheit wenigstens eines Dispergiermittels, **dadurch gekennzeichnet, dass** die Polymerisation in Anwesenheit eines festen Polymerisationskatalysators durchgeführt wird, wobei als fester Polymerisationskatalysator ein mit einem homogenen Polymerisationskatalysator imprägniertes und/oder behandeltes Trägermaterial eingesetzt wird, und wobei als homogener Polymerisationskatalysator ein Metallkomplex eingesetzt wird, der als Metallzentrum ein Metall der Gruppe VIIIB, IB oder IIB des Periodensystems enthält.

2. Verfahren nach einem Anspruch 1, **dadurch gekennzeichnet, dass** die Polymerisation der wenigstens einen olefinisch ungesättigten Verbindung in Anwesenheit von Kohlenmonoxid erfolgt.

3. Verfahren nach einem der Ansprüche 1 oder 2, **dadurch gekennzeichnet, dass** das wässrige Medium ≤ 10 Gew.-% eines organischen Lösungsmittels zugesetzt enthält.

4. Verfahren nach einem der Ansprüche 1 bis 3, **dadurch gekennzeichnet**, der feste Polymerisationskatalysator durch Filtration oder Zentrifugation von der gebildeten wässrigen Polymerisatdispersion abgetrennt wird.

5. Verfahren zur Herstellung einer wässrigen Polymerisatdispersion durch Polymerisation von wenigstens einer olefinisch ungesättigten Verbindung in einem wässrigen Medium in Anwesenheit wenigstens eines Dispergiermittels, **dadurch gekennzeichnet, dass** die Polymerisation in Anwesenheit eines festen Polymerisationskatalysators durchgeführt wird, welcher gemäß Anspruch 4 aus einer wässrigen Polymerisatdispersion abgetrennt wurde.

6. Wässrige Polymerisatdispersion, erhältlich nach einem Verfahren gemäß einem der Ansprüche 1 bis 5.

7. Verwendung der wässrigen Polymerisatdispersion gemäß Anspruch 6 als Bindemittel in Klebstoffen, Dichtmassen, Kunststoffputzen, Papierstreichmassen und Anstrichmitteln.

## Claims

1. A process for preparing an aqueous polymer dispersion by polymerization of at least one olefinically unsaturated compound in an aqueous medium in the presence of at least one dispersant, wherein the polymerization is carried out in the presence of a solid polymerization catalyst, where a support material impregnated and/or treated with a homogeneous polymerization catalyst is used as solid polymerization catalyst and a metal complex whose metal center is a metal of group VIIIB, IB or IIB of the Periodic Table is used as homogeneous polymerization catalyst.

2. The process according to claim 1, wherein the polymerization of the olefinically unsaturated compound or compounds is carried out in the presence of carbon monoxide.

3. The process according to either of claims 1 or 2, wherein the aqueous medium comprises ≤ 10% by weight of an added organic solvent.

4. The process according to any of claims 1 to 3, wherein the solid polymerization catalyst is separated off from the aqueous polymer dispersion formed by filtration or centrifugation.

5. A process for preparing an aqueous polymer dispersion by polymerization of at least one olefinically unsaturated compound in an aqueous medium in the presence of at least one dispersant, wherein the polymerization is carried out in the presence of a solid polymerization catalyst which has been separated off as set forth in claim 4 from an aqueous polymer dispersion.

6. An aqueous polymer dispersion obtainable by a process according to any of claims 1 to 5.

7. The use of an aqueous polymer dispersion according to claim 6 as binder in adhesives, sealants, polymer-based plasters and renders, paper coating compositions and paints.

## Revendications

1. Procédé pour la préparation d'une dispersion aqueuse d'un polymère par polymérisation d'au moins un composé oléfiniquement insaturé dans un milieu aqueux en présence d'au moins un dispersant, **caractérisé en ce que** la polymérisation est réalisée en présence d'un catalyseur de polymérisation solide, où on utilise comme catalyseur de polymérisation solide un matériau support imprégné et/ou traité avec un catalyseur de polymérisation homogène, et où on utilise comme catalyseur de polymérisation homogène un complexe métallique qui contient, comme centre métallique, un métal du groupe VIIIB, IB ou IIB du système périodique.

2. Procédé selon la revendication 1, **caractérisé en ce que** la polymérisation dudit au moins un composé oléfiniquement insaturé est réalisée en présence de monoxyde de carbone.

3. Procédé selon l'une quelconque des revendications 1 ou 2, **caractérisé en ce qu'**on ajoute au milieu aqueux ≤ 10% en poids d'un solvant organique.

4. Procédé selon l'une quelconque des revendications 1 à 3, **caractérisé en ce que** le catalyseur de polymérisation solide est séparé par filtration ou centrifugation de la dispersion aqueuse de polymère formée.

5. Procédé pour la préparation d'une dispersion aqueuse d'un polymère par polymérisation d'au moins un composé oléfiniquement insaturé dans un milieu aqueux en présence d'au moins un dispersant, **caractérisé en ce que** la polymérisation est réalisée en présence d'un catalyseur de polymérisation solide, qui est séparé selon la revendication 4 d'une dispersion aqueuse de polymère.

6. Dispersion aqueuse de polymère pouvant être obtenue selon un procédé selon l'une quelconque des revendications 1 à 5.

7. Utilisation de la dispersion aqueuse de polymère selon la revendication 6 comme liant dans des adhésifs, des masses d'étanchéité, des enduits synthétiques, des masses de couchage pour papier et des peintures.
